# EUROPÄISCHE PATENTSCHRIFT

(11) **EP 0 384 297 B1**
(45) Veröffentlichungstag und Bekanntmachung des Hinweises auf die Patenterteilung: **09.11.1994**
(21) Anmeldenummer: 90102966.0
(22) Anmeldetag: 15.02.1990
(51) Int. Cl.: D01G 15/28, G01B 21/16

(54) **Karde**
Carding machine
Machine de cardage

(30) Priorität: 16.02.1989 DE 3904732; 27.04.1989 DE 3913996
(43) Veröffentlichungstag der Anmeldung: 29.08.1990
(73) Patentinhaber: MASCHINENFABRIK RIETER AG, CH-8406 Winterthur (CH)
(72) Erfinder: Fritzsche, Peter, CH-8405 Winterthur (CH)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-79/00983
- DE-A- 3 029 052
- DE-C- 229 595
- FR-A- 429 818

## Beschreibung

Die vorliegende Erfindung betrifft eine Karde, bestehend aus einem Tambour und zu diesem einstellbaren, vorzugsweise einen Nennabstand aufweisenden Teilen wie einem Briseur, stationären Deckel, Wanderdeckel und Abnehmer. Die Erfindung betrifft ferner ein Verfahren zur Überprüfung des Abstands zwischen einem Tambour und diesem gegenüberliegenden Teilen einer Karde.

Beim Zusammenbau einer Karde sowie während des Betriebs einer solchen Karde ist es sehr wichtig, den Arbeitsabstand zwischen der Stachelgarnitur des Tambours und den entsprechenden Garnituren der mit diesem zusammenwirkenden Teile genau einzustellen bzw. einzuhalten.

Die Durchführung dieser Einstellungen ist bislang von Hand mittels Lehren durchgeführt worden. Diese Arbeit ist zeitraubend und kostspielig sowie nur von besonderen Fachkräften durchführbar. Ein weiterer Nachteil, dem große Bedeutung zukommt, liegt darin, daß es bislang nicht möglich war, den eingestellten Abstand während des eigentlichen Betriebs der Karde zu überprüfen. Somit war es sehr schwierig, die sich aufgrund von Zentrifugalkräften und thermischen Dehnungen ergebenden Änderungen der vorgenommenen Einstellungen zu erfassen.

Um die Probleme der thermischen Dehnungen in den Griff zu bekommen, ist beispielsweise aus der US-A-4 499 632 bekannt, die Temperatur des Tambours mittels eines Wärmeträgers konstant und gleichmäßig zu halten. Es leuchtet ein, daß solche Maßnahmen sehr aufwendig und zudem leckanfällig sind.

Aus der DE-A-29 48 825 ist auch bekannt, die Arbeitsverhältnisse zwischen zwei mit einer Spitzengarnitur ausgerüsteten, ein Faservlies bearbeitenden oder sich gegenseitig übertragenden rotierenden Zylindern einer Verarbeitungsmaschine der Stapelfaserspinnerei durch eine Anpassung des Abstandes zwischen den beiden Zylinderoberflächen stets auf einem vorbestimmten Wert zu halten. Zu diesem Zweck werden Stelleinrichtungen verwendet, die es gestatten, den Abstand zwischen den Drehachsen der beiden Zylinder sehr genau einzustellen, wobei die Stelleinrichtungen mittels Steuereinrichtungen gesteuert werden. Das Meßsignal einer in direktem Zusammenhang mit dem Durchmesser eines der Zylinder stehenden Größe, welche von einem Meßorgan erfaßt wird, wird den Steuereinrichtungen zugeführt, wobei diese dann die Stelleinrichtungen in Abhängigkeit von der Größe steuern. Somit wird erreicht, daß die störenden Einflüsse der Fliehkraft und der Erwärmung der Zylinder auf die Arbeitsverhältnisse vollständig ausgeschaltet werden.

Die genannten Stelleinrichtungen sind etweder mechanische Stelleinrichtungen oder wärmedehnbare Strukturen, deren Längen durch Zufuhr- bzw. Abfuhr von Wärme veränderbar sind.

Die Meßsignale, die der Steuerung zugeführt werden, sind beispielsweise die Drehzahl des Tambours und/oder seine Temperatur.

Auch ist gesagt worden, daß man den Abstand zwischen den zylindrischen Flächen oder den Durchmesser des Tambours ebensogut mit einem entsprechenden Meßorgan (z.B. mit einem berührungslosen Taster oder einem photooptischen Meßgerät) direkt messen könnte.

Aufgabe der vorliegenden Erfindung ist es, eine Karde so auszubilden, daß mit minimalem Aufwand der Abstand zwischen dem Tambour und allen direkt mit diesem zusammenwirkenden Teilen sowohl beim Zusammenbau der Karde als auch im Betrieb oder nach Wartungsmaßnahmen zuverlässig ermittelt werden kann, und zwar ohne daß die Betriebsperson dafür eine besondere Ausbildung benötigt.

Zur Lösung dieser Aufgabe ist erfindungsgemäß vorgesehen, daß zum Überprüfen des vorhandenen bzw. bereits eingestellten Abstands zwischen dem Tambour und den diesem gegenüberliegenden Teilen auf mindestens einer Seite und vorzugsweise auf beiden Seiten des Tambours ein jeweiliger Fühler vorgesehen ist, der über eine Kopplungseinrichtung mit einer Auswertungselektronik gekoppelt ist.

Die Erfindung beruht demnach auf der Erkenntnis, daß er bei Anbringung eines Meßfühlers am Tambour selbst es möglich ist, die Einstellungen aller mit diesem direkt zusammenarbeitender Teile genauestens zu kontrollieren, wobei diese Kontrolle sogar einmal pro Umdrehung des Tambours erfolgen kann. Da der gleiche Fühler für alle Messungen verwendet wird, führt die Ausbildung gemäß der Erfindung zu keinem besonderen Aufwand. Weiterhin hat der erfindungsgemäße Vorschlag den Vorteil, daß alle Messungen auch im Betrieb der Karde durchgeführt werden können, ohne daß Teile der Karde entfernt werden müssen, so daß man zum ersten Mal in der Lage ist, die Auswirkungen von Zentrifugalkräften und thermischen Dehnungen in allen Betriebsstadien genauestens zu erfassen.

Eine besonders bevorzugte Ausführungsform der Erfindung zeichnet sich dadurch aus, daß an den dem Tabour gegenüberliegenden Teilen dem Fühler bzw. den Fühlern zumindest in der Meßstellung gegenüberliegende und mit diesem bzw. diesen zusammenwirkende Gegenstücke vorgesehen sind. Durch die Verwendung solcher Gegenstücke, die bei manchen Fühlersorten sowieso erforderlich sind, kann man Meßverfälschungen durch benachbarte Strukturen der Karde bzw. der entsprechenden Teile ausschalten. Weiterhin ist es möglich, die Gegenstücke so anzuordnen, daß sie in gleicher Höhe wie die Garniturspitzen der Garnituren der zugeordneten Teile liegen, so daß bei einer Anordnung der Fühler in der radialen Höhe der Spitzen der Tambourgarnitur der Abstand zwischen Gegenstück und Fühler stets dem Arbeitsabstand zwischen den Garniturspitzen des Tambours und denen des jeweils anderen Teils ist. Bei sich drehenden dem Tambour gegenüberliegenden Teilen, wie beispielsweise Briseur oder Abnehmer, können die Gegenstücke ringförmig ausgebildet sein, wodurch nicht nur der Abstand zwischen den Arbeitsspitzen, sondern auch eventuelle Verformungen bzw. Exzentrizitäten des Tambours bzw. des Briseurs ermittelt werden können. Hierzu kann man die Tatsache ausnutzen, daß die Drehgeschwindigkeiten und Durchmesser unterschiedlich sind, so daß der Fühler bei jeder Umdrehung des Tambours mit einem anderen Bereich des ringförmigen Gegenstücks zusammenarbeitet.

Für jeden Fühler ist vorzugsweise mindestens ein die Kopplungseinrichtung darstellender Schleifring zum Auslesen der entstehenden Signale bzw. zur Beaufschlagung des Fühlers mit elektrischer Energie bzw. Meßimpulsen vorgesehen. Die Verwendung von Schleifringen stellt eine einfache Maßnahme dar, die Signale der sich mit dem Tambour drehenden Fühler der üblicherweise stationär angeordneten Auswertungselektronik zuzuführen, bzw. in umgekehrter Richtung die Stromversorgung von einem stationären Netzteil zu den Fühlern zu übertragen.

Die Erfindung ist aber nicht auf die Verwendung von Schleifringen beschränkt.

Die Kopplungseinrichtung kann auch aus einer Signalübertragungseinrichtung bestehen, welche die Signale mittels Wellen, beispielsweise Funkwellen, Lichtwellen oder Schallwellen an einem Empfangsgerät senden, wobei die Signalübertragungseinrichtung vorzugsweise mit dem Tambour mitläuft.

Die Auswertungselektronik ist vorzugsweise mit dem Umlaufen des Tambours derart synchronisiert, daß eine Zuordnung der Signale des Fühlers bzw. der Fühler zum jeweils gegenüberliegenden Teil erfolgt sind.

Beispielsweise ist es möglich eine Einrichtung zum Erzeugen eines Triggersignals vorzugsehen, um die Zuordnung der erwünschten Signale zu den zu messenden Teilen zu erleichtern. Die Einrichtung zum Erzeugen von Triggersignalen könnte beispielsweise aus zwei kurz hintereinander angeordneten Gegenstücken bestehen.

Bei den Fühlern kann es sich um jede herkömmliche Art von Abstandsmeßfühlern handeln, also beispielsweise induktive, kapazititve oder optische Sensoren, beispielsweise solche, die als V-Lichtschranken ausgebildet sind. Im Regelfall werden die Fühler erfindungsgemäß berührungslos arbeiten, so daß kein Verschleiß und daher auch keine Meßwertverfälschung entsteht. Beim Zusammenbau der Karde können die von den Fühlern ermittelten Werte mit tatsächlich gemessenen Werten verglichen und zur Eichung der Auswerteelektronik herangezogen werden.

Das erfindungsgemäße Verfahren zur Überprüfung des Abstands zwischen einem Tambour und diesem gegenüberliegenden Teilen einer Karde zeichnet sich dadurch aus, daß der Abstand stets vom Tambour aus gemessen wird. Die Abstandsmessung erfolgt zweckmäßigerweise auf zumindest einer, vorzugsweise auf beiden Seiten des Tambours. Die gemäß der Erfindung ausgebildete Karde ist zur Durchführung dieses Verfahrens besonders geeignet.

Die Erfindung wird nachfolgend anhand der Zeichnungen näher erläutert, in welcher zeigt:
- Fig. 1: einen schematischen Teillängsschnitt durch den Tambour einer Karde im Bereich eines hiermit zusammenarbeitenden stationären Deckels,
- Fig. 2: einen Schnitt entsprechend dem Schnitt der Fig. 1, jedoch im Bereich des engsten Spaltes zwischen einem Briseur und dem Tambour, wobei der Schnitt in einer die Drehachsen des Briseurs und des Tambours enthaltenden Ebene vorgenommen ist, und
- Fig. 3: ein schematisches Blockschaltbild einer Auswerteelektronik.

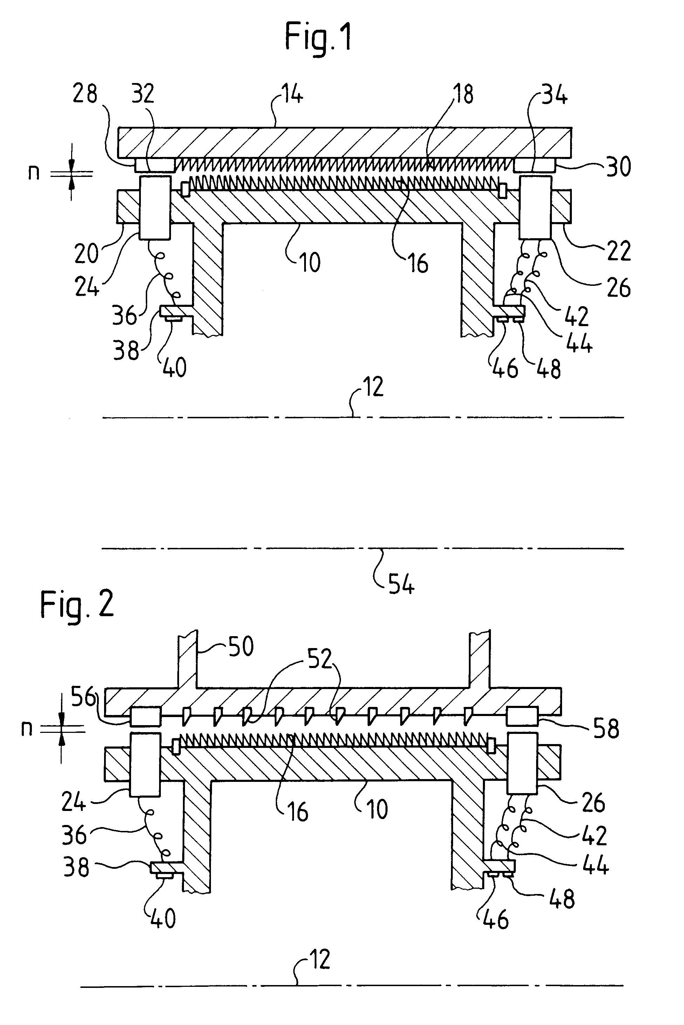

Die Fig. 1 zeigt mit 10 einen Längsquerschnitt durch einen Tambour, der im Betrieb um die Drehachse 12 läuft. Der Schnitt ist in einer die Drehachse 12 enthaltenden Ebene vorgenommen, in der ein stationärer Deckel 14 dem Tambour 10 gegenüberliegt. Der Tambour 10 trägt an seiner Mantelfläche eine Sägezahngarnitur 16, deren Arbeitsspitzen einen Nennabstand n von den Arbeitsspitzen einer entsprechenden Sägezahngarnitur 18 des stationären Deckels 14 aufweisen sollen. Zur Messung dieser Abstände weist der trommelartige Tambour an seinen linken und rechten Zylinderflanschen 20 und 22 jeweils einen Fühler 24 bzw. 26 auf. Diesem gegenüberliegend sind am stationären Deckel Gegenstücke 28, 30 vorgesehen, deren den Fühlern zugewandte Flächen 32 bzw. 34 die gleiche Höhe aufweisen wie die Arbeitsspitzen 18. Die Arbeitsflächen 32, 34 können eben sein, in welchem Fall der Abstand n sich geringfügig während der Umlaufbewegung des Tambours an dem Besatz in einem Deckel vorbei ändert, oder sie können eine Krümmung aufweisen, deren Krümmungszentrum an der Drehachse 12 liegt, wodurch der Abstand n während der Umlaufbewegung des Tambours 10 am stationären Deckel vorbei zumindest im wesentlichen konstant bleibt.

Bei den Fühlern 24 bzw. 26 kann es sich um jede bekannte Art von berührungslosen Abstandsmeßfühlern handeln. Rein darstellungshalber sind in Fig. 1 zwei verschiedene Meßfühler dargestellt, obwohl die beiden Fühler normalerweise gleich ausgebildet sein werden. Der Fühler 24 benötigt nur eine einzelne Signalleitung 36, welche zu einem auf einem Ringflansch 38 des Tambours angebrachten Schleifring 40 führt. Hier kann das Signal mittels eines üblichen Bürstenkontakts (nicht gezeigt) abgenommen werden. Im Falle des Fühlers 26 sind zwei Leitungen 42 und 44 vorgesehen, welche zu jeweiligen Schleifkontakten 46 und 48 führen.

Die Ausführung gemäß Fig. 2 ist der der Fig. 1 ähnlich, weshalb gleiche Bezugszeichen für die gleichen Teile verwendet werden. Es handelt sich hier jedoch nicht um einen stationären Deckel, sondern um ein Briseur 50, der mit Sägezahnarbeitsspitzen 52 ausgestattet ist. Hier geht es darum, den Abstand n zwischen den Spitzen der Sägezahngarnitur des Briseurs 50 und Arbeitsspitzen 16 des Tambours 10 zu messen, wofür die gleichen Fühler 24 und 26 verwendet werden wie für die Messung des Abstandes des stationären Deckels gemäß Fig. 1. Die Schnittebene der Fig. 2 enthält sowohl die Drehachse 12 des Tambours als auch die Drehachse 54 des Briseurs, so daß der Abstand n seinen minimalen Wert hat. Bei diesem Beispiel sind die Gegenstücke 56 und 58 ringförmig ausgebildet, wodurch der Abstand n in verschiedenen Drehwinkeln des Briseurs 50 gemessen werden kann, um hierdurch Informationen über eine Verformung oder Exzentrizität derselben zu erhalten. Bei stationärem Briseur können ebenfalls Informationen über eine eventuelle Verformung bzw. Exzentrizität des Tambours 10 ermittelt werden, wobei diese Ermittlung auch mit jedem anderen mit dem Tambour zusammenarbeitenden Teil feststellbar ist.

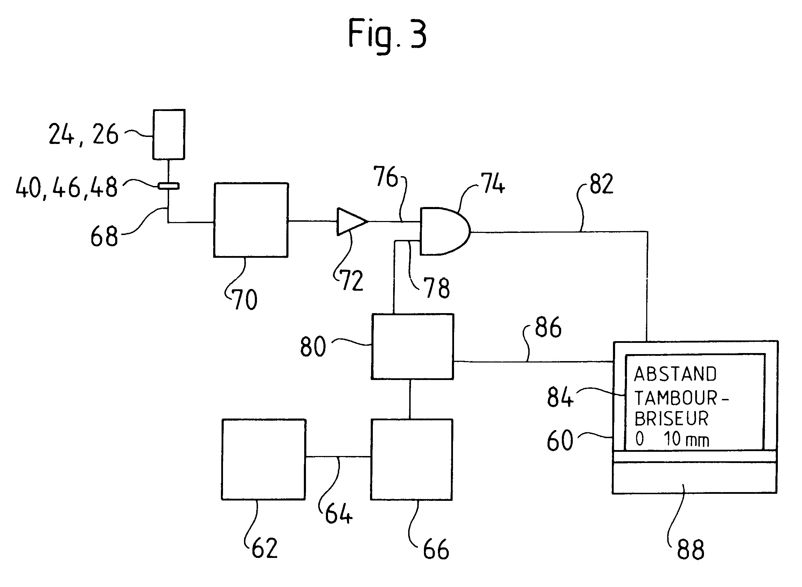

Die Fig. 3 zeigt wie die von dem Meßfühler 24 bzw. 26 kommenden Meßsignale weiterverarbeitet werden können. Hier ist die Auswerteelektronik in Form eines Mikrocomputers 60 ausgebildet. Der Drehantrieb 62 des Tambours ist mittels einer Welle 64 mit einem Tachoinitiator 66 gekoppelt, der als Taktquelle für die Synchronisierung des Mikroprozessors 60 mit den Meßsignalen dient. Die vom Meßfühler 24 bzw. 26 kommenden Signale führen über den jeweiligen Schleifkontakt 40, 46, 48 und einen Bürstenkontakt 68 zu einem Digital/Analogwandler 70, sofern die Signale vom Fühler 26 nicht bereits in Digitalform erscheinen. Dem Digital/Analogwandler ist ein Verstärker 72 und ein UND-Gatter 74 nachgeschaltet. Mit anderen Worten wird das digitale verstärkte Meßsignal an dem einen Eingang 76 des UND-Gatters 74 angelegt. Am anderen Eingang 78 erscheint von einer Steuerschaltung 80 dann ein Signal, wenn beispielsweise der Fühler 26 dem Briseur gegenüberliegt. Das in diesem Moment vorhandene Meßsignal wird dann über die Leitung 82 dem Mikrocomputer 60 zugeführt, der aus diesem Signal den Abstand Tambour - Briseur ermittelt und den aktuellen Wert auf dem Bildschirm 84 darstellt.

Die Steuerschaltung 80 wird vom Mikrocomputer aus über die Leitung 86 so angesteuert, daß sie nur dann ein Signal an dem Eingang 78 anlegt, wenn, ausgehend von den Signalen des Tachoinitiators 66, die Fühler sich in der Winkellage befinden, in der eine Messung gegenüber dem Briseur möglich ist.

Die Betriebsperson kann über die Tastatur 88 auch andere Abstände abrufen, beispielsweise den Abstand zu einem stationären Deckel oder zum Abnehmer, wozu ein entsprechendes Steuersignal über die Leitung 86 an die Steuerelektronik 80 geschickt wird, wodurch nur das jeweils erwünschte Meßsignal vom UND-Gatter 74 über die Leitung 82 am Mikrocomputer erscheint und von diesem ausgewertet und angezeigt wird.

Es ist einleuchtend, daß viele der beschriebenen Funktionen direkt vom Mikrocomputer aus durchgeführt werden können. Wenn es sich beispielsweise um einen Mikrocomputer handelt, der auch zum Betrieb der gesamten Karde benutzt wird, wobei dieser Computer auch die Steuersignale für die Regelung der Antriebe der Karde erzeugt, so kann das Signal der jeweiligen Meßfühler dem Computer direkt zugeführt werden und die gesamte Meßauswertung durch entsprechende Algorithmen im Mikrocomputer ermittelt werden.

Nachdem der Abstand n zwischen dem Tambour und einem diesem gegenüberliegenden Teil bzw. mehreren diesem gegenüberliegenden Teilen gemessen worden ist, besteht die Möglichkeit, die Karde bereits während des Kardierbetriebes einzustellen, um den gemessenen Ist-Wert des Abstandes auf einen Sollwert zu bringen. Diese Einstellung der Karde kann nach einem der bekannten Verfahren erfolgen, beispielsweise können die mit dem Tambour zusammenarbeitenden Teile entsprechend dem deutschen Patent 29 48 825 auf einem thermisch dehnbaren und/oder zusammenziehbaren Teil bzw. mehreren thermisch dehnbaren und/oder zusammenziehbaren Teilen montiert werden, wodurch die relativen Lagen des Tambours und dem diesem gegenüberliegenden Teil bzw. den diesem gegenüberliegenden Teilen durch Steuerung der Temperatur der thermisch dehnbaren Teile steuerbar ist.

Alternativ hierzu kann der Abstand n dadurch geregelt werden, daß das dem Tambour gegenüberliegende Teil,beispielsweise das Briseur oder der Abnehmer auf einer einstellbaren Abstützeinrichtung montiert ist, vorzugsweise einer solchen Abstützeinrichtung, bei der "Slip-stick", d.h. die Haftreibung weitestgehend vermieden wird. Eine solche Abstützeinrichtung, die sich für den vorliegenden Zweck eignet, ist beispielsweise aus der deutschen Patentanmeldung P 39 07 517.6 (Anwaltsaktenzeichen R 2696) mit der Bezeichnung "Regulierung des Kardierabstandes" oder aus der späteren deutschen Patentanmeldung P 39 40 229.0 (Anwaltsaktenzeichen R 2893) mit der Bezeichnung "Einstelleinrichtung" bekannt.

## Patentansprüche

1. Karde, bestehend aus einem Tambour (10) und zu diesem einstellbaren, vorzugsweise einen Nennabstand aufweisenden Teilen wie einem Briseur (50), stationären Deckel (14), Wanderdeckel und Abnehmer, dadurch gekennzeichnet, daß zum Überprüfen des vorhandenen bzw. bereits eingestellten Abstands zwischen dem Tambour (10) und den diesem gegenüberliegenden Teilen (14, 50) auf mindestens einer Seite und vorzugsweise auf beiden Seiten des Tambours ein jeweiliger Fühler (24, 26) vorgesehen ist, der über eine Kopplungseinrichtung (40, 46, 48) mit einer Auswertungselektronik (60) gekoppelt ist.

2. Karde nach Anspruch 1, dadurch gekennzeichnet, daß an den dem Tambour (10) gegenüberliegenden Teilen (14, 50) dem Fühler bzw. den Fühlern (24, 26) zumindest in der Meßstellung gegenüberliegende und mit diesem bzw. diesen zusammenwirkende Gegenstücke (28, 30; 56, 58) vorgesehen sind.

3. Karde nach einem der Ansprüche 1 oder 2, dadurch gekennzeichnet, daß für jeden Fühler (24, 26) mindestens ein die Kopplungseinrichtung darstellender Schleifring (40; 46, 48) zum Auslesen der entstehenden Signale bzw. zur Beaufschlagung des Fühlers mit elektrischer Energie bzw. Meßimpulsen vorgesehen ist.

4. Karde nach einem der Ansprüche 1 oder 2, dadurch gekennzeichnet, daß die Kopplungseinrichtung aus einer Signalübertragungseinrichtung besteht, welche die Signale mittels Wellen, beispielsweise Funkwellen, Lichtwellen oder Schallwellen an einem Empfangsgerät sendet, wobei die Signalübertragungseinrichtung vorzugsweise mit dem Tambour mitläuft.

5. Karde nach einem der vorhergehenden Ansprüche, dadurch gekennzeichnet, daß die Auswertungselektronik (60) mit dem Umlaufen des Tambours (10) derart synchronisiert ist, daß eine Zuordnung der Signale des Fühlers bzw. der Fühler (24, 26) zum jeweils gegenüberliegenden Teil erfolgt.

6. Karde nach Anspruch 5, dadurch gekennzeichnet, daß eine Einrichtung zum Erzeugen eines Triggersignals vorgesehen ist, um die Zuordnung zu erleichtern, wobei die Einrichtung beispielsweise aus zwei hintereinander angeordneten Gegenstücken bestehen könnte.

7. Karde nach einem der vorhergehenden Ansprüche, dadurch gekennzeichnet, daß der bzw. jeder Fühler (24, 26) ein induktiver Sensor ist.

8. Karde nach einem der vorhergehenden Ansprüche 1 bis 6, dadurch gekennzeichnet, daß der bzw. jeder Fühler (24, 26) ein kapazitiver Sensor ist.

9. Karde nach einem der vorhergehenden Ansprüche 1 bis 6, dadurch gekennzeichnet, daß der bzw. jeder Fühler (24, 26) ein optischer Sensor ist und beispielsweise als V-Lichtschranke ausgebildet ist.

10. Verfahren zur Überprüfung des Abstands zwischen einem Tambour und diesem gegenüberliegenden Teilen einer Karde, dadurch gekennzeichnet, daß der Abstand stets vom Tambour aus gemessen wird.

11. Verfahren nach Anspruch 10, dadurch gekennzeichnet, daß die Abstandsmessung auf zumindest einer, vorzugsweise auf beiden Seiten des Tambours erfolgt.

12. Verfahren nach Anspruch 10 oder 11, dadurch gekennzeichnet, daß der zwischen dem Tambour und einem diesem gegenüberliegenden Teil bzw. mehreren diesem gegenüberliegenden Teilen gemessene Abstand als Eingangsgröße für die Lageregelung des Teils bzw. der Teile dem Tambour gegenüber verwendet wird, um diesen Abstand auf einen Sollwert hin zu regeln.

## Claims

1. A carding machine consisting of a swift (10) and parts adjustable thereto and preferably having a nominal distance therefrom such as a licker-in (50), a stationary flat (14), a revolving flat and a doffer, characterized in that for verifying the existing or already set distance between the swift (10) and the parts (14, 50) opposite thereto there is provided on at least one side and preferably on either side a respective sensor (24, 26) which is coupled via a coupling device (40, 46, 48) to an electronic evaluating circuit (60).

2. A carding machine as claimed in claim 1, characterized in that on the parts (14, 50) opposite to the swift (10) there are provided counterparts (28, 30; 56, 58) which are opposite to the sensor(s) (14, 50) at least in the measuring position and which cooperate with it or with these.

3. A carding machine as claimed in one of the claims 1 or 2, characterized in that for each sensor (24, 26) there is provided at least one collector ring (40; 46, 48) representing the coupling device for reading out the arising signals or for supplying the sensor with electric power or measured pulses.

4. A carding machine as claimed in one of the claims 1 or 2, characterized in that the coupling device consists of a signal transmission device which sends the signals by means of waves such as radio waves, light waves or sonic waves, for example, to a receiver unit, with the signal transmission device preferably running synchronously with the swift.

5. A carding machine as claimed in one of the previous claims, characterized in that the electronic evaluating circuit (60) is synchronized with the rotation of the swift in such a way that an allocation of the signal of the sensor(s) (24) to the respective opposite part is made.

6. A carding machine as claimed in claim 5, characterized in that a device for producing a trigger signal is provided so as to facilitate the allocation, whereby the device may consist, for example, of two successively arranged counterparts.

7. A carding machine as claimed in one of the previous claims, characterized in that the sensor or every sensor (24, 26) is an inductive sensor.

8. A carding machine as claimed in one of the previous claims 1 to 6, characterized in that the sensor or every sensor (24, 26) is a capacitative sensor.

9. A carding machine as claimed in one of the previous claims 1 to 6, characterized in that the sensor or every sensor (24, 26) is an optical sensor and is arranged, for example, as a V-light barrier.

10. A method for verifying the distance between a swift and a part of the card opposite thereto, characterized in that the distance is always measured starting out from the swift.

11. A method as claimed in claim 10, characterized in that the distance measurement is made on at least one side, preferably on either side of the swift.

12. A method as claimed in claim 10 or 11, characterized in that the distance measured between the swift and a part opposite thereto or several parts opposite thereto is used as input value for controlling the position of the part(s) with respect to the swift so as to control said distance towards a set value.

## Revendications

1. Carde, constituée d'un tambour (10) et de parties réglables, telles qu'un briseur (50), des chapeaux stationnaires (14), des chapeaux balladeurs et un peigneur, possédant de préférence une distance nominale par rapport à celui-ci,
caractérisée par le fait que,
pour vérifier la distance existante, respectivement celle qui vient d'être réglée, comprise entre le tambour (10) et les parties (14, 50) lui faisant face, un tâteur respectif (24, 26) est prévu sur au moins un côté et de préférence sur les deux côtés du tambour, tâteur qui est relié avec une électronique d'évaluation (60) via un arrangement d'accouplement (40, 46, 48).

2. Carde selon revendication 1,
caractérisée par le fait que
des contre-pièces (28, 30; 56, 58) sont prévues sur les parties (14, 50) faisant face au tambour (10), qui sont disposées en face du tâteur respectivement des tâteurs (24, 26), au moins dans la position de mesure, et qui agissent conjointement avec celui-ci respectivement ceux-ci.

3. Carde selon l'une des revendications 1 ou 2,
caractérisée par le fait
qu'une bague collectrice (40; 46, 48) représentant l'arrangement d'accouplement est au moins prévue pour chaque tâteur (24, 26), afin de trier les signaux en formation, respectivement de charger le tâteur avec de l'énergie électrique respectivement avec des impulsions de mesure.

4. Carde selon l'une des revendications 1 ou 2,
caractérisée par le fait que
l'arrangement d'accouplement est constitué d'un arrangement de transmission de signaux qui émet les signaux vers un appareil récepteur, a l'aide d'ondes, par exemple des ondes radio, des ondes lumineuses ou des ondes acoustiques, et où de préférence l'arrangement de transmission de signaux tourne avec le tambour.

5. Carde selon l'une des revendications précédentes,
caractérisée par le fait que
l'électronique d'évaluation (60) est synchronisée avec la rotation du tambour (10) de telle sorte qu'une attribution des signaux du tâteur respectivement des tâteurs (24, 26) se fait à la partie correspondante étant située en face.

6. Carde selon revendication 5,
caractérisée par le fait
qu'un arrangement est prévu pour la production d'un signal de déclenchement, afin de faciliter l'attribution, et où l'arrangement pourrait être constitué par exemple de deux contre-pièces disposées l'une derrière l'autre.

7. Carde selon l'une des revendications précédentes,
caractérisée par le fait que
le tâteur respectivement chaque tâteur (24, 26) est un détecteur inductif.

8. Carde selon l'une des revendications précédentes 1 à 6,
caractérisée par le fait que
le tâteur respectivement chaque tâteur (24, 26) est un détecteur capacitif.

9. Carde selon l'une des revendications précédentes 1 à 6,
caractérisée par le fait que
le tâteur respectivement chaque tâteur (24, 26) est un détecteur optique, et est formé par exemple comme barrage photoélectrique en V.

10. Procédé servant a l'examination de la distance existant entre un tambour d'une carde et des parties étant disposées en face de celui-ci,
caractérisé par le fait que
la distance est toujours mesurée depuis le tambour.

11. Procédé selon revendication 10,
caractérisé par le fait que
la mesure de la distance s'effectue de préférence sur au moins les deux côtés du tambour.

12. Procédé selon revendication 10 ou 11,
caractérisé par le fait que
la distance, mesurée entre le tambour et une partie lui faisant face respectivement plusieurs parties lui faisant face, est utilisée comme grandeur d'entrée pour le réglage de la position de la partie respectivement des parties par rapport au tambour, dans le but de régler cette distance sur une valeur de consigne.
